# EUROPEAN PATENT APPLICATION

(11) **EP 2 799 608 A1**
(43) Date of publication of application: **05.11.2014**
(21) Application number: 11878579.9
(22) Date of filing: 27.12.2011
(51) Int. Cl.: D06B 15/04, D06M 13/348, D03D 15/00

(54) **METHOD FOR TREATING HIGH STRENGTH FABRIC TO BE WATER REPELLENT**

(71) Applicant: Kolon Industries Inc, Kwacheon-si, Kyunggi-do 427-709 (KR)
(72) Inventor: HAN, In Sik, Daegu 702-280 (KR)
(74) Representative: Merkle, Gebhard
(86) International application number: PCT/KR2011/010130
(87) International publication number: WO 2013/100214

(57) **Abstract**

The present invention relates to a method for treating high-strength fabric to be water-repellent, which includes dipping a high-strength fabric in a water-repellent agent composition to impregnate the high-strength fabric with the water-repellent agent composition, and then, using an air-suction machine to pick-up a part of the water-repellent agent composition impregnated in the high-strength fabric before drying and heating the same. The present invention has advantages in that a part of the water-repellent agent composition impregnated in the high-strength fabric may be uniformly picked-up during dipping, so as to improve water-repellent performance, especially, water-repellency after friction as well as initial water-repellency, and may effectively prevent occurrence of wrinkles on the high-strength fabric during water-repellent treatment. The high-strength fabric obtained by water-repellent treatment according to the present invention exhibits increased flexibility without wrinkles, so as to improve wearing comfort. Further, in case of using the fabric as a raw fabric for bulletproof garments, water-repellency is increased to prevent deterioration in bulletproof properties caused by water absorption.

## Description

### [Technical Field]

The present invention relates to water-repellent treatment of a high-strength fabric, and more particularly, to a method for treating high-strength fabric to be water-repellent. which can uniformly pick-up a water-repellent agent composition impregnated in the high-strength fabric while preventing the high-strength fabric from being wrinkled.

The high-strength fabric is a fabric woven by warp and weft, wherein at least one of the warp and weft includes a high-strength yarn such as wholly aromatic polyamide multifilament or carbon fiber, and widely used in manufacturing bulletproof garments or the like.

Water-repellent treatment of the high-strength fabric is generally executed to improve flexibility and water-repellency of the high-strength fabric and, when the bulletproof garments are manufactured using the high-strength fabric obtained by water-repellent treatment, wearing comfort and bulletproof properties can be remarkably enhanced.

### [Background Art]

A conventional method for water-repellent treatment of a high-strength fabric mostly includes: dipping a woven and refined high-strength fabric in a water-repellent agent composition to impregnate the fabric with the water-repellent agent composition; conducting a padding process which includes squeezes the fabric to pick-up the water-repellent agent composition impregnated in the high-strength fabric using a mangle; and drying and heating the same in a tenter.

However, such a conventional method as described above adopts a padding mode of removing (that is, 'pick-up') the water-repellent agent composition impregnated in the high-strength fabric while passing the same, that is, the high-strength fabric impregnated with the water-repellent agent composition between two squeezing rollers, therefore, entails some problems such as wrinkling on the high-strength fabric, restriction in uniformly picking-up the water-repellent agent composition impregnated in the high-strength fabric, or the like.

Accordingly, the water-repellent fabric obtained by the conventional method has disadvantages such as poor flexibility and water-repellent performance, occurrence of wrinkles, or the like. Therefore, if bulletproof garments are manufactured using the same, water absorption due to reduced water-repellent performance has caused deterioration in bulletproof performance, and lack of flexibility has encountered a problem of reduced wearing comfort.

### [Summary of the Invention]

### [Problems to be Solved by the Invention]

In order to solve the conventional problems as described above, it is an object of the present invention to provide a new water-repellent treatment method of a high-strength fabric, capable of uniformly removing ('pick-up') a part of water-repellent agent components impregnated in the high-strength fabric while not occurring wrinkles on the same.

### [Means for Solving the Problems]

In order to achieve the above object, there is provided a method for water-repellent treatment, which includes using an air-suction machine instead of a typical mangle used in the art, in order to uniformly pick-up a part of a water-repellent agent composition impregnated in a high-strength fabric during dipping.

Further, the present invention adopts a pre-drying process of the high-strength fabric, which is in wet state while passing a refining process, before dipping it in the water-repellent agent composition.

### [Effects of the Invention]

According to the present invention, a part of the water-repellent agent composition impregnated in the high-strength fabric can be uniformly removed (picked-up) during dipping, therefore, water-repellent performance, specifically, both of water-repellency after friction and initial water-repellency may be enhanced, and occurrence of wrinkles on a high-strength raw fabric during water-repellent treatment may be effectively prevented.

As a result, the high-strength fabric obtained by water-repellent treatment according to the present invention does not have wrinkles but has increased flexibility to improve wearing comfort and, when this is used as a raw fabric for bulletproof garments, water-repellency may be increased to prevent reduction in bulletproof properties cause by water absorption.

### [Modes for Carrying out the Invention]

Hereinafter, the present invention will be described in more detail.

First, a water-repellent treatment method of a high-strength fabric according to the present invention includes: dipping a high-strength fabric in a water-repellent agent composition to impregnate the fabric with the water-repellent agent composition; and using an air-suction machine to pick-up a part of the water-repellent agent composition impregnated in the high-strength fabric before drying and heating the same.

Herein, it is preferable that 35 to 65% of the water-repellent agent composition impregnated in the high-strength fabric is picked-up by using the air-suction machine, so as to improve flexibility and water-repellent performance of the high-strength fabric.

If a pick-up rate is less than 35%, further processes of drying and heating should be carried out for extended time to thus deteriorate flexibility. On the other hand, when the pick-up rate exceeds 65%, water-repellent performance and flexibility may be reduced due to lack of the water-repellent agent.

In this regard, the high-strength fabric in wet state (moisturized) while being subjected to a refining process is preferably pre-dried before dipping the same in the water-repellent agent composition, so as to increase a concentration of the water-repellent agent composition impregnated in the high-strength fabric in a following dipping process.

As described above, the present invention uses an air-suction machine, instead of the conventional mangle, in order to pick-up the water-repellent agent composition impregnated in the high-strength fabric. Accordingly, occurrence of wrinkles on the high-strength fabric during water-repellent treatment may be effectively prevented, as well as, the water-repellent agent composition impregnated in the high-strength fabric may be more uniformly removed (that is, picked-up).

More particularly, one embodiment of the water-repellent treatment method of a high-strength fabric according to the present invention may include: (i) refining a woven high-strength fabric; (ii) pre-drying the refined high-strength fabric; (iii) dipping the pre-dried high-strength fabric in a water-repellent agent composition; (iv) using an air-suction machine to uniformly pick-up a part of the water-repellent agent composition impregnated in the high-strength fabric obtained after the dipping process; and (v) drying and heating the resultant high-strength fabric in a tenter, wherein a part of the impregnated water-repellent agent composition was uniformly picked up from the fabric, thereby completing the water-repellent treatment of the high-strength fabric.

The high-strength fabric is a fabric textured of warp and weft wherein at least one of the warp and weft includes high-strength yarns such as wholly aromatic polyamide multifilament, glass fiber, carbon fiber, or the like.

The water-repellent agent composition may be a water-soluble solution containing hydroxylated perfluoroalkylethyl acrylate copolymer, however, a constitutional ratio of the water-repellent agent composition is not particularly limited.

Herein, a content of hydroxylated perfluoroalkylethyl acrylate copolymer in the water-repellent agent composition preferably ranges from 2 to 35 wt. parts to 100 wt. parts of the water-repellent agent composition.

A particular example of the water-repellent agent composition may be a water-repellent agent composition which includes: 1 to 5 wt.% water-soluble solution of a composition containing 25 to 35 wt.% of hydroxylated perfluoroalkylethyl acrylate copolymer, 10 to 15 wt.% of dipropylene glycol and 50 to 65 wt.% of water; and 0.1 to 1 wt. parts of silicon oil and 0.5 to 10 wt. parts of isopropylalcohol relative to 100 wt. parts of the water-soluble solution.

Hereinafter, the present invention will be more particularly understood by the following examples and comparative examples.

However, these examples are proposed for more concretely explaining the present invention, while not limiting the scope of the present invention.

### Example 1

First, a 2.5 wt.% water-soluble solution of a composition including 30 wt.% of hydroxylated perfluoroalkylethyl acrylate copolymer, 15 wt.% of dipropyleneglycol and 55 wt.% of water was prepared. After adding 0.3 wt. part of silicon oil and 5 wt. parts of isopropylalcohol to 100 wt. parts of the above water-soluble solution, the mixture was sufficiently agitated to prepare a water-repellent agent composition. Then, a wholly aromatic polyamide fabric refined using a surfactant was dipped in the above water-repellent agent composition, to impregnate the wholly aromatic fabric with the water-repellent agent composition.

In this regard, the wholly aromatic polyamide fabric used in this example was a fabric woven in a plain form with each of warp and weft densities of 10 threads/cm by using wholly aromatic multifilaments as the warp and weft threads, each of which includes 1,000 wholly aromatic polyamide monofilaments having a fineness of 1.0.

Following this, using an air-suction machine has picked-up a part of the water-repellent agent composition impregnated in the wholly aromatic polyamide fabric, more particularly, at a pick-up rate of 60%. Then, the treated fabric was dried and heat treated in a tenter at 150°C for 1 minute.

Physical properties of the wholly aromatic polyamide fabric obtained by water-repellent treatment were evaluated and results thereof are shown in Table 1.

### Example 2

The wholly aromatic polyamide fabric was subjected to water-repellent treatment according to the same process under the same conditions as described in Example 1, except that the refined wholly aromatic polyamide fabric was pre-dried at 180°C for 30 seconds before dipping.

Physical properties of the wholly aromatic polyamide fabric obtained by water-repellent treatment were evaluated and results thereof are shown in Table 1.

### Comparative Example 1

The wholly aromatic polyamide fabric was subjected to water-repellent treatment according to the same process under the same conditions as described in Example 1, except that a part of the water-repellent agent composition impregnated in the wholly aromatic polyamide fabric was removed (that is, picked-up) at a pick-up rate of 60% using a mangle instead of an air-suction machine.

Physical properties of the wholly aromatic polyamide fabric obtained by water-repellent treatment were evaluated and results thereof are shown in Table 1.

**[TABLE 1]**

| Results of evaluating physical properties | | | |
|---|---|---|---|
| Items | Example 1 | Example 2 | Comparative Example 1 |
| Initial water-repellency | 90 | 100 | 90 |
| Water-repellency after rubbing 100 times | 90 | 100 | 80 |
| Stiffness (kgf) | 0.50 | 0.35 | 0.65 |
| Occurrence of wrinkles within 20 m of fabric obtained after water-repellent treatment | Not occurred | Not occurred | Occurred |

Physical properties stated in the above Table 1 were evaluated to the following procedure.

### Occurrence of wrinkles

Visual observation by experts was executed to monitor and determine occurrence of wrinkles.

### Measurement of stiffness

After cutting off each of the fabrics obtained by water-repellent treatment according to the above examples and comparative example into pieces, to prepare a sample having a size of 100 mm × 200 mm. Then, the prepared sample was subjected to measurement of stiffness by a circular-bend method according of ASTM D 4032. More particularly, the sample was folded in half and placed on a strut with a size of 102 mm × 102 mm × 6 mm, which has a punched hole having a diameter of 38.1 mm. Next, when pressing the sample down using a bar, a force of pushing the fabric down through the 38.1 mm hole was measured to determine the stiffness.

### Measurement of initial water-repellency

After cutting off each of the fabrics obtained by water-repellent treatment according to the above examples and comparative example into pieces, to prepare a sample having a size of 250 mm × 250 mm. Then, the prepared sample was subjected to measurement of initial water-repellency by a spray method according of ISO 4920:1981.

### Measurement of water-repellency after friction

After cutting off each of the fabrics obtained by water-repellent treatment according to the above examples and comparative example into pieces, to prepare a sample having a size of 250 mm × 250 mm. Then, the prepared sample was rubbed 100 times using a shiefer type wear tester SAT-250. After completion of the rubbing, the sample was subjected to measurement of water-repellency after friction by a spray method according of ISO 4920:1981.

### [Industrial Applicability]

The high-strength fabric obtained by water-repellent treatment according to the present invention exhibits excellent wearing comfort and bulletproof properties, thereby being effectively useable as raw materials of bulletproof garments.

## Claims

1. A method for treating high strength-fabric to be water-repellent, comprising: dipping the high-strength fabric in a water-repellent agent composition to impregnate the high-strength fabric with the water-repellent agent composition; and using an air-suction machine to pick-up a part of the water-repellent agent composition impregnated in the high-strength fabric, before drying and heating the same.

2. The method according to claim 1, wherein the high-strength fabric is firstly pre-dried and then dipped in the water-repellent agent composition.

3. The method according to claim 1, wherein 35 to 65% of the water-repellent agent composition impregnated in the high-strength fabric is picked-up by using the air-suction machine.

4. The method according to claim 1, wherein the water-repellent agent composition is a water-soluble solution containing hydroxylated perfluoroalkylethyl acrylate copolymer.

5. The method according to claim 4, wherein a content of hydroxylated perfluoroalkylethyl acrylate copolymer in the water-repellent agent composition ranges from 2 to 35 wt. parts to 100 wt. parts of the water-repellent agent composition.

6. The method according to claim 1, wherein the high-strength fabric is a fabric woven by warp and weft wherein at least one of the warp and weft includes one high-strength yarn selected from a group consisting of wholly aromatic polyamide multifilament, glass fiber and carbon fiber.
